# EUROPÄISCHE PATENTSCHRIFT

(11) **EP 3 511 585 B1**
(45) Veröffentlichungstag und Bekanntmachung des Hinweises auf die Patenterteilung: **08.07.2020**
(21) Anmeldenummer: 18151631.1
(22) Anmeldetag: 15.01.2018
(51) Int. Cl.: F16C 32/04, G01B 7/14

(54) **VERFAHREN ZUR ÜBERWACHUNG EINER MAGNETLAGERVORRICHTUNG**
METHOD FOR MONITORING A MAGNETIC BEARING DEVICE
PROCÉDÉ DE SURVEILLANCE D'UN DISPOSITIF DE PALIER MAGNÉTIQUE

(43) Veröffentlichungstag der Anmeldung: 17.07.2019
(73) Patentinhaber: Siemens Aktiengesellschaft, 80333 München (DE)
(72) Erfinder: Köhler, Bert-Uwe, 14612 Falkensee (DE)

(56) Entgegenhaltungen:
- EP-A1- 2 644 917
- EP-A1- 2 781 774
- JP-A- H11 166 533
- JP-A- S59 187 113
- JP-A- 2006 029 453
- JP-A- 2007 263 251

## Beschreibung

Die Erfindung betrifft ein Verfahren zur Überwachung einer Magnetlagervorrichtung.

Darüber hinaus betrifft die Erfindung eine Steuereinheit mit Mitteln zur Durchführung eines derartigen Verfahrens.

Ferner betrifft die Erfindung ein Computerprogramm zur Durchführung eines derartigen Verfahrens bei Ablauf in einer Steuereinheit.

Die Erfindung betrifft überdies ein Computerprogrammprodukt mit einem Computerprogramm.

Des Weiteren betrifft die Erfindung eine Sensorvorrichtung zur Durchführung eines derartigen Verfahrens.

Zudem betrifft die Erfindung eine Magnetlagervorrichtung mit mindestens einem Magnetlager und mindestens einer Sensorvorrichtung.

Die Erfindung betrifft außerdem eine elektrische rotierende Maschine mit mindestens einer Magnetlagervorrichtung.

Ein derartiges Verfahren wird insbesondere in einem aktiven Magnetlager einer schnell drehenden elektrischen rotierenden Maschine, beispielsweise eines Motors, eines Generators, eines Kompressors oder einer Turbine, eingesetzt. Beispielsweise ist die schnell drehende elektrische rotierende Maschine mit einer Leistung von mindestens 1 Megawatt und einer Drehzahl von mindestens 5000 U/min betreibbar, die Erfindung ist jedoch nicht auf derartige Maschinen beschränkt.

Eine Lageregelung eines aktiven Magnetlagers erfolgt mit Hilfe von Lagemesswerten zur Position des Drehkörpers. Der Drehkörper ist beispielsweise ein Rotor der elektrischen rotierenden Maschine. Die Lagemesswerte werden mit Abstandssensoren erfasst. Fällt ein solcher Sensor aus oder liefert der Sensor falsche Messwerte, ist die Lagereglung nicht mehr in der Lage, den Drehkörper in der korrekten Position zu halten. Um eine Integrität der Magnetlagervorrichtung in der elektrischen rotierenden Maschine zu überwachen, ist es erforderlich, die Funktionalität der Lagesensoren und der Lagebestimmung im Ganzen permanent zu überprüfen und bei Feststellen einer Fehlfunktion die elektrische rotierende Maschine in einen sicheren Zustand zu überführen.

Da die Lageregelung auf Basis der vorliegenden Lagemesswerte auf einen Zielpunkt regelt, ist die Integrität der Lagemesswerte, die für die Regelung genutzt werden, aus den genutzten Lagemesswerten allein nicht ermittelbar.

Die Patentschriften DE 10 2009 039 485 B4 und EP 2 644 917 A1 beschreiben ein Regelungssystem und Verfahren zur Regelung eines Magnetlagers.

Die Offenlegungsschrift DE 42 15 381 A1 beschreibt eine Anordnung mit zwei Sensoreinheiten zur radialen und/oder zur axialen Positionserfassung einer Welle, die jeweils zumindest aus einem Paar etwa diametral gegenüberliegender Sensoren bestehen.

Die Offenlegungsschrift EP 3 203 191 A1 beschreibt eine Sensorvorrichtung für eine Magnetlagervorrichtung, welche einen Verschiebungssensor und einen Sensorring aufweist.

Der Erfindung liegt die Aufgabe zugrunde, die Überwachung der Lagebestimmung eines Drehkörpers in einem aktiven Magnetlager zu verbessern.

Diese Aufgabe wird erfindungsgemäß durch ein Verfahren zur Überwachung einer Magnetlagervorrichtung gelöst, welche ein erstes Paar zumindest im Wesentlichen diametral gegenüberliegender Sensoren und ein zweites Paar zumindest im Wesentlichen diametral gegenüberliegender Sensoren aufweist, welche zum ersten Paar Sensoren um einen Winkel versetzt angeordnet sind, wobei jeweils ein Abstand eines Sensors zu einem Drehkörper, welcher innerhalb der Sensorpaare angeordnet ist, durch zeitliche Mittelung einer Mehrzahl von Abstandsmessungen ermittelt wird, wobei die Abstände verglichen werden, wobei, sobald ein Unterschied der Abstände einen Grenzwert überschreitet, ein Warnsignal ausgegeben wird.

Ferner wird die Aufgabe erfindungsgemäß durch eine Steuereinheit, ein Computerprogramm, ein Computerprogrammprodukt, eine Sensorvorrichtung, eine Magnetlagervorrichtung und eine elektrische rotierende Maschine mit den in den Ansprüchen 9 bis 14 angegebenen Merkmalen gelöst.

Die in Bezug auf das Verfahren nachstehend angeführten Vorteile und bevorzugten Ausgestaltungen lassen sich sinngemäß auf die Steuereinheit, das Computerprogramm, das Computerprogrammprodukt, die Sensorvorrichtung, die Magnetlagervorrichtung und die elektrische rotierende Maschine übertragen.

Der Erfindung liegt die Überlegung zugrunde, bei einem aktiven Magnetlager eine Sensorauswertung zweier unabhängig geregelter Sensorachsen, welche um einen Winkel versetzt zueinander angeordnet sind, mit dem jeweils anderen Paar Abstandssensoren zu verknüpfen und damit eine Konsistenzprüfung der Sensordaten durchzuführen. Das aktive Magnetlager ist als Radiallager und/oder als Axiallager ausgeführt. Unter einer Konsistenzprüfung ist beispielsweise eine Überprüfung der Sensordaten hinsichtlich ihrer Integrität zu verstehen. Die Sensordaten sind beispielsweise nicht konsistent, falls ein Abstandssensor ausfällt, oder, beispielsweise durch eine Sensordrift, falsche Messwerte liefert, wobei durch eine derartige Inkonsistenz der Drehkörper nicht mehr in eine korrekte Position regelbar ist.

Bei der Konsistenzprüfung werden jeweils die Abstände der Sensoren zum Drehkörper über eine zeitliche Mittelung einer Mehrzahl von Abstandsmessungen ermittelt. Die zeitlichen Mittelwerte der Abstände werden miteinander verglichen. Eine Inkonsistenz der Sensordaten liegt bei einem Unterschied der Abstände vor, wobei, sobald der Abstandsunterschied einen Grenzwert überschreitet, ein Warnsignal ausgegeben wird. Der Grenzwert ist so zu wählen, dass eine Fehlauslösung vermieden wird, aber dennoch zuverlässig eine Kollision des Drehkörpers mit beispielsweise einem Fanglager verhindert wird. Das Warnsignal ist ein akustisches, optisches und/oder elektrisches Signal, wobei bei einem Warnsignal beispielsweise die elektrische rotierende Maschine in einen sicheren Zustand überführt wird. Die elektrische rotierende Maschine ist beispielsweise ein Motor, ein Generator, ein Kompressor oder eine Turbine. Insbesondere ist die elektrische rotierende Maschine mit einer Leistung von mindestens 1 Megawatt und einer Drehzahl von mindestens 5000 U/min betreibbar.

Eine durch eine Wärmeentwicklung insbesondere des Rotors im Betrieb der elektrischen rotierenden Maschine auftretende thermische Aufweitung ist bei einer derartigen Konsistenzprüfung unproblematisch, da die thermische Aufweitung zumindest im Wesentlichen gleichmäßig in Radialrichtung stattfindet und kein Absolutwertvergleich erfolgt, sondern die Sensoren relativ zueinander betrachtet werden. Die Wahrscheinlichkeit eines Fehlalarms wird somit signifikant reduziert.

Durch eine Steuereinheit wird der Verfahrensablauf zur Konsistenzprüfung der Sensordaten gesteuert. Die Mittel zur Durchführung eines derartigen Verfahrens umfassen ein Computerprogramm und beispielweise einen Mikrocontroller oder einen anderen programmierbaren Logikbaustein. Die Steuereinheit ist beispielsweise in der Sensorvorrichtung angeordnet.

Durch die kombinierte Auswertung beider Sensorachsen wird eine Sensorüberwachung ohne zusätzliche Sensorik ermöglicht. Daher ist die Konsistenzprüfung der Sensordaten preiswert und wirkungsvoll umsetzbar.

Bei einer bevorzugten Ausgestaltung wird durch einen Vergleich der Abstände des ersten Paars Sensoren und durch einen Vergleich der Abstände des zweiten Paars Sensoren geprüft, ob eine Regelung eingeschwungen ist. Durch eine Überprüfung, ob sich die Regelung in einem stabilen Zustand befindet, wird eine Anzahl von Fehlerquellen für die Konsistenzprüfung reduziert, sodass sich die Wahrscheinlichkeit für einen Fehlalarm zusätzlich reduziert.

In einer bevorzugten Ausführungsform werden bei einer eingeschwungenen Regelung ein erster Abstand des ersten Sensors und/oder ein zweiter Abstand des zweiten Sensors mit einem dritten Abstand des dritten Sensors und/oder einem vierten Abstand des vierten Sensors verglichen, wobei, sobald ein Unterschied der Abstände einen Grenzwert überschreitet, ein Warnsignal ausgegeben wird. Insbesondere wird eine Position des Drehkörpers durch das Magnetlager so geregelt, dass die Differenz der Abstände eines Sensorpaares Null wird. Im eingeschwungenen Zustand der Regelung wird mindestens ein Abstandswert des ersten Sensorpaares, welches der ersten Sensorachse zugeordnet ist, mit mindestens einem Abstandswert des zweiten Sensorpaares, welches der zweiten Sensorachse zugeordnet ist, verglichen. Durch eine derartige kombinierte Nutzung beider Sensorachsen wird eine Sensorüberwachung ohne zusätzliche Sensorik ermöglicht, sodass die Sensorüberwachung preiswert und wirkungsvoll umsetzbar ist.

Besonders vorteilhaft sind die Sensoren als induktive Verschiebungssensoren ausgeführt, durch welche die Abstände kontaktlos erfasst werden. Ein induktiver Verschiebungssensor wird auch Wirbelstromsensor genannt. Derartige Sensoren sind sehr genau, kostengünstig und zuverlässig.

In einer weiteren vorteilhaften Ausgestaltung ist das zweite Paar der diametral gegenüberliegenden Sensoren um einen Winkel von 60° bis 120° gedreht zum ersten Paar der diametral gegenüberliegenden Sensoren angeordnet. Durch eine derartige Anordnung der Sensorachsen wird eine Auswertung der Messungen erleichtert.

Besonders vorteilhaft weist der Drehkörper einen zumindest im Wesentlichen kreisförmigen Querschnitt auf. Durch einen kreisförmigen Querschnitt ergeben sich, insbesondere bei hohen Drehzahlen, beispielsweise von mindestens 5000 U/min, optimale Rotationseigenschaften. Ferner wird eine Auswertung der Messungen erleichtert, da sich die Abstände zum Sensor bei einem kreisförmigen Querschnitt während der Rotation nicht ändern.

Bei einer weiteren vorteilhaften Ausführungsform wird zumindest ein redundanter Sensor im Bereich eines der Sensoren angeordnet, wobei ein Abstand des zumindest einen redundanten Sensors zum Drehkörper ermittelt wird. Mit zumindest einem zusätzlichen Sensor ist, über die Inkonsistenz der Sensorik hinaus, ein defekter Sensor detektierbar.

Besonders vorteilhaft wird ein defekter Sensor durch einen Vergleich der ermittelten Abstände detektiert. Da für die Sensoren der betroffenen Achse und dem am nächsten benachbarten redundanten Sensor hinsichtlich der Entfernung zum Drehkörper im Wesentlichen identische Rahmenbedingungen gelten, ist mit einem Vergleich der Abstände der am nächsten benachbarten Sensoren insbesondere eine Achse mit einem defekten Sensor erkennbar, und durch Umschalten der Regelung von dem dem redundanten Sensor benachbarten Sensor auf den redundanten Sensor ist der defekte Sensor selbst detektierbar. Durch eine derartige unmittelbare Identifizierung eines defekten Sensors ohne weitere Messungen wird eine Stillstandzeit der elektrischen rotierenden Maschine verringert und damit die Verfügbarkeit der Maschine verbessert.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine,
- FIG 2: einen Querschnitt durch eine Magnetlagervorrichtung mit einer ersten Ausführungsform einer Sensorvorrichtung und
- FIG 3: einen Querschnitt durch eine Magnetlagervorrichtung mit einer zweiten Ausführungsform einer Sensorvorrichtung.

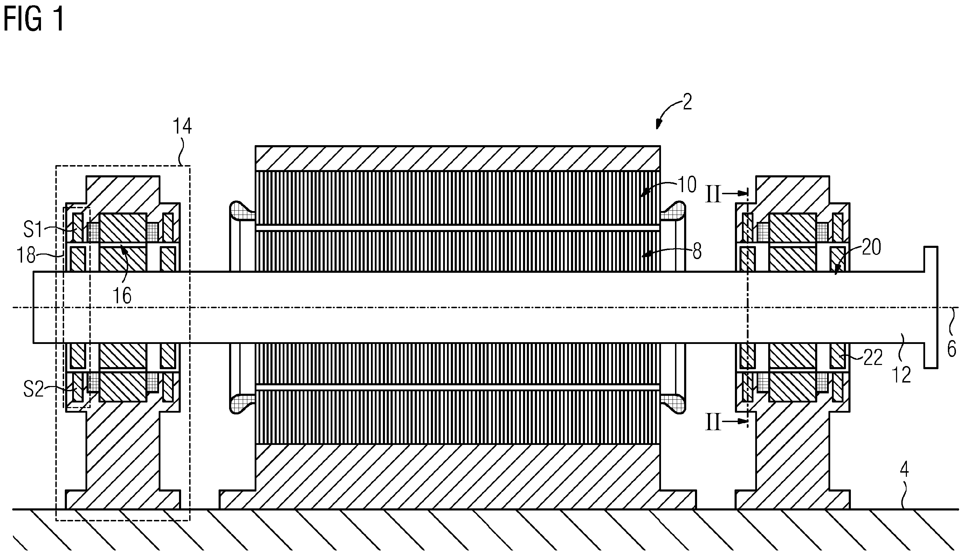

FIG 1 zeigt eine elektrische rotierende Maschine 2, welche auf einem Fundament 4 steht. Die elektrische rotierende Maschine 2 ist als Motor oder als Generator ausgeführt und weist einen um eine Rotationsachse 6 rotierbaren Rotor 8 und einen den Rotor 8 umgebenden Stator 10 auf. Eine Welle 12 des Rotors 8 ist an beiden axialen Enden durch jeweils eine aktive Magnetlagervorrichtung 14 berührungslos gelagert. Alternativ ist die elektrische rotierende Maschine 2 als Kompressor oder Turbine mit einer Welle 12 ausgeführt, welche an den axialen Enden durch jeweils eine aktive Magnetlagervorrichtung 14 berührungslos gelagert ist.

Über eine Sensorvorrichtung 18 wird eine Lage eines Drehkörpers 20 ermittelt, wobei der Drehkörper 20 den Rotor 8 mit der Welle 12 umfasst. Optional weist der Drehkörper 20 im Bereich der Sensorvorrichtung 18 einen Sensorring 22 auf, welcher mit der Welle 12 verbunden ist. Beispielsweise ist der Sensorring 22 mit der Welle 12 stoffschlüssig verbunden oder auf die Welle 12 aufgeschrumpft. Der Drehkörper 20 weist einen zumindest im Wesentlichen kreisförmigen Querschnitt auf.

Die Sensorvorrichtung umfasst um den Umfang der Welle 12 herum angeordnete Sensoren S1, S2, welche als induktive Verschiebungssensoren ausgestaltet und dafür geeignet sind, Abstände des Drehkörpers 20 zu den jeweiligen Sensoren S1, S2 kontaktlos zu erfassen. Die induktiven Verschiebungssensoren werden beispielsweise dazu herangezogen, über einen Luftspalt eine Impedanz und bevorzugt eine Änderung der Impedanz zu messen.

Die Magnetlagervorrichtung 14 ist exemplarisch als Radiallager ausgeführt. Eine Verwendung der Sensorvorrichtung 18 für ein Axiallager ist ebenfalls Gegenstand der Patentanmeldung, wobei im Falle eines Axiallagers die Sensorvorrichtung 18 dafür vorgesehen ist, die Position des Drehkörpers 20 in axialer Richtung zu ermitteln.

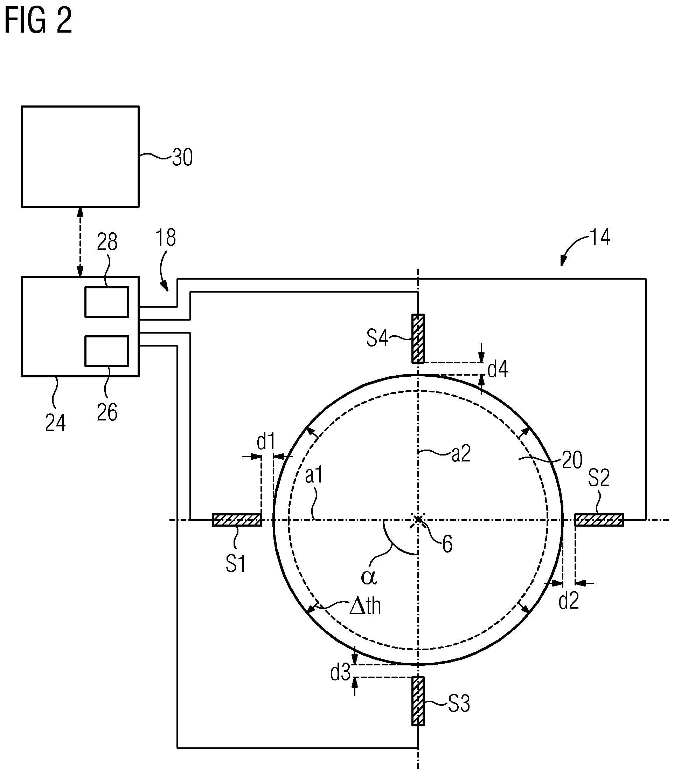

FIG 2 zeigt einen Querschnitt durch eine Magnetlagervorrichtung 14 mit einer ersten Ausführungsform einer Sensorvorrichtung 18, wobei ein Drehkörper 20 durch die Magnetlagervorrichtung 14 berührungslos gelagert ist. Die Sensorvorrichtung 18 umfasst zwei Paar der diametral gegenüberliegenden Sensoren S1, S2, S3, S4, welche jeweils eine Achse a1, a2 bilden, wobei die zweite Achse a2 des zweiten Paares S3, S4 um einen Winkel α im Bereich von 90° zur ersten Achse a1 des ersten Paares S1, S2 gedreht angeordnet ist. Die Sensoren S1, S2, S3, S4 sind mit einer Zentraleinheit 24 verbunden, welche eine Auswerteeinheit 26 und eine Steuereinheit 28 umfasst. Eine Übertragung der gemessenen Sensordaten an die Zentraleinheit 24 erfolgt beispielsweise elektrisch, insbesondere kabelgebunden, oder optisch über Lichtleiter. Die Sensoren S1, S2, S3, S4 sind als induktive Verschiebungssensoren ausgeführt, durch welche jeweils die Abstände d1, d2, d3, d4 des jeweiligen Sensors S1, S2, S3, S4 zum Drehkörper 20 kontaktlos erfasst werden. Die ermittelten Daten werden digitalisiert und zumindest teilweise an eine IT-Infrastruktur 30 gesendet. Eine IT-Infrastruktur 30 ist beispielsweise mindestens ein lokales Computersystem oder eine Cloud und stellt Speicherplatz, Rechenleistung und Anwendungssoftware bereit. In einer Cloud werden Speicherplatz, Rechenleistung und Anwendungssoftware als Dienstleistung über das Internet zur Verfügung gestellt. Die digitale Datenübertragung an die IT-Infrastruktur 30 findet drahtlos, drahtgebunden oder optisch statt.

Beispielswiese werden die Daten über Bluetooth oder WLAN übertragen.

Die Sensorpaare S1, S2, S3, S4 der jeweiligen Achsen a1, a2 weisen unterschiedliche Regler auf, welche aus Gründen der Übersichtlichkeit in FIG 2 nicht dargestellt sind. Für die Regelung werden die Lagemesswerte der Sensoren S1, S2, S3, S4 genutzt. Die Abstände d1, d2, d3, d4 werden so geregelt, dass sich d2-d1=0 und d4-d3=0 ergibt. Die Sensoren werden so kalibriert, dass die Zielposition einer Nullverschiebung entspricht. Somit gilt nach der Kalibrierung d1=d2=d3=d4.

Zunächst wird durch einen Vergleich der Abstände d1, d2 des ersten Paars Sensoren S1, S2 und durch einen Vergleich der Abstände d3, d4 des zweiten Paars Sensoren S3, S4 geprüft, ob eine Regelung eingeschwungen ist.

Ist die Regelung eingeschwungen, d.h. es gelten d1=d2 und d3=d4, wird eine Konsistenzprüfung der Sensordaten beider Achsen a1, a2 durchgeführt: Es werden ein erster Abstand d1 des ersten Sensors S1 und/oder ein zweiter Abstand d2 des zweiten Sensors S2 mit einem dritten Abstand d3 des dritten Sensors S3 und/oder einem vierten Abstand d4 des vierten Sensors S4 verglichen, wobei, sobald ein Unterschied der Abstände d1, d2, d3, d4 einen Grenzwert überschreitet, ein Warnsignal ausgegeben wird. Da d1=d2 und d3=d4 gilt, ist es ausreichend, einen der Abstände d1, d2 des ersten Paars Sensoren S1, S2 mit einem der Abstände d3, d4 des zweiten Paars Sensoren S3, S4 zu vergleichen. Alternativ werden alle Abstände d1, d2, d3, d4 verglichen, ob d1=d2=d3=d4 gilt.

Während des Betriebes tritt eine thermische Rotoraufweitung Δth auf, d.h. durch eine Erwärmung des Rotors 8 vergrößert sich ein Durchmesser des Drehkörpers 20 leicht, aber gleichmäßig. Die thermische Rotoraufweitung Δth ist jedoch unproblematisch, weil die Abstände d1, d2, d3, d4 der Sensoren S1, S2, S3, S4 miteinander verglichen werden und kein Vergleich der Absolutwerte erfolgt. Eine Anwendung auf Axiallager ist möglich. Die weitere Ausführung der Magnetlagervorrichtung 14 in FIG 2 entspricht der in FIG 1.

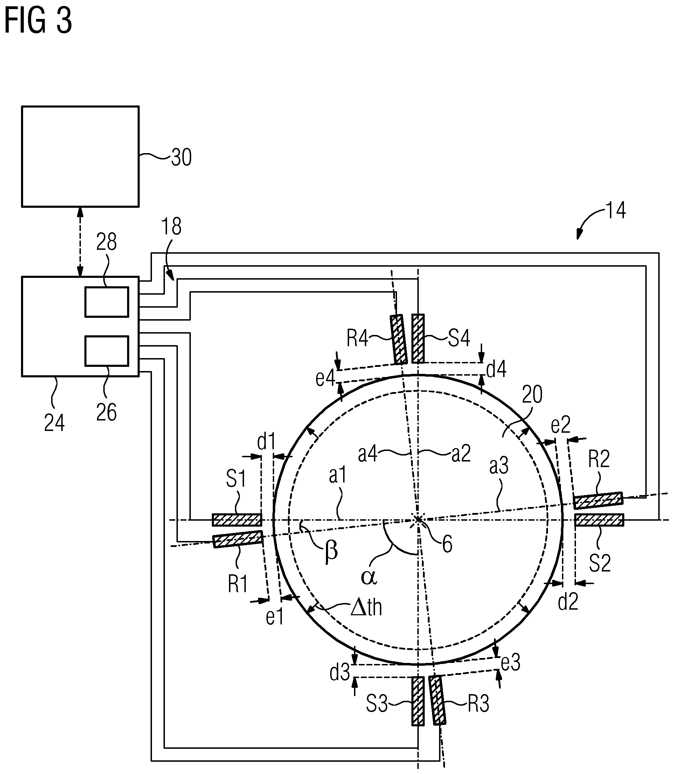

FIG 3 zeigt einen Querschnitt durch eine Magnetlagervorrichtung 14 mit einer zweiten Ausführungsform einer Sensorvorrichtung 18. Den Sensoren S1, S2, S3, S4 ist jeweils ein redundanter Sensor R1, R2, R3, R4 zugeordnet, um über eine mögliche Inkonsistenz der Sensorik hinaus auch direkt einen defekten Sensor zu detektieren. Die redundanten Sensoren R1, R2, R3, R4 sind paarweise diametral gegenüberliegend angeordnet, wobei die Paare jeweils eine Achse ausbilden. Die Achsen a3, a4 der redundanten Sensoren R1, R2, R3, R4 sind um einen Versatzwinkel β im Bereich von bis zu 10° zu den Achsen a1, a2 der Sensoren S1, S2, S3, S4 gedreht angeordnet. Für die Sensoren S1, S2, S3, S4 und ihre am nächsten benachbarten redundanten Sensoren R1, R2, R3, R4 gelten hinsichtlich der Entfernung zum Drehkörper 20 die im Wesentlichen identischen Rahmenbedingungen.

Die Abstände e1, e2, e3, e4 der redundanten Sensoren R1, R2, R3, R4 zum Drehkörper 20 werden ermittelt, wobei ein defekter Sensor S1, S2, S3, S4, R1, R2, R3, R4 durch einen Vergleich der ermittelten Abstände d1, d2, d3, d4, e1, e2, e3, e4 detektiert wird. Die weitere Ausführung der Magnetlagervorrichtung 14 in FIG 3 entspricht der in FIG 2.

Zusammenfassend betrifft die Erfindung ein Verfahren zur Überwachung einer Magnetlagervorrichtung 14. Um eine Überwachung der Lagebestimmung eines Drehkörpers in einem aktiven Magnetlager zu verbessern, wird vorgeschlagen, dass die Magnetlagervorrichtung 14 ein erstes Paar zumindest im Wesentlichen diametral gegenüberliegender Sensoren S1, S2 und ein zweites Paar zumindest im Wesentlichen diametral gegenüberliegender Sensoren S3, S4, welche zum ersten Paar Sensoren S1, S2 um einen Winkel α versetzt angeordnet sind, aufweist, wobei jeweils ein Abstand d1, d2, d3, d4 eines Sensors S1, S2, S3, S4 zu einem Drehkörper 20, welcher innerhalb der Sensorpaare S1, S2; S3, S4 angeordnet ist, durch zeitliche Mittelung einer Mehrzahl von Abstandsmessungen ermittelt wird, wobei die Abstände d1, d2, d3, d4 verglichen werden, wobei, sobald ein Unterschied der Abstände d1, d2, d3, d4 einen Grenzwert überschreitet, ein Warnsignal ausgegeben wird.

## Patentansprüche

1. Verfahren zur Überwachung einer Magnetlagervorrichtung (14),
aufweisend ein erstes Paar zumindest im Wesentlichen diametral gegenüberliegender Sensoren (S1, S2) und
ein zweites Paar zumindest im Wesentlichen diametral gegenüberliegender Sensoren (S3, S4),
welche zum ersten Paar Sensoren (S1, S2) um einen Winkel (α) versetzt angeordnet sind,
**dadurch gekennzeichnet, dass** jeweils ein Abstand (d1, d2, d3, d4) eines Sensors (S1, S2, S3, S4) zu einem Drehkörper (20), welcher innerhalb der Sensorpaare (S1, S2; S3, S4) angeordnet ist, durch zeitliche Mittelung einer Mehrzahl von Abstandsmessungen ermittelt wird,
wobei die Abstände (d1, d2, d3, d4) verglichen werden, wobei, sobald ein Unterschied der Abstände (d1, d2, d3, d4) einen Grenzwert überschreitet, ein Warnsignal ausgegeben wird.

2. Verfahren nach Anspruch 1,
wobei durch einen Vergleich der Abstände (d1, d2) des ersten Paars Sensoren (S1, S2) und durch einen Vergleich der Abstände (d3, d4) des zweiten Paars Sensoren (S3, S4) geprüft wird, ob eine Regelung eingeschwungen ist.

3. Verfahren nach Anspruch 2,
wobei bei einer eingeschwungenen Regelung ein erster Abstand (d1) des ersten Sensors (S1) und/oder ein zweiter Abstand (d2) des zweiten Sensors (S2) mit einem dritten Abstand (d3) des dritten Sensors (S3) und/oder einem vierten Abstand (d4) des vierten Sensors (S4) verglichen werden,
wobei, sobald der Unterschied der Abstände (d1, d2, d3, d4) den Grenzwert überschreitet, ein Warnsignal ausgegeben wird.

4. Verfahren nach einem der vorherigen Ansprüche,
wobei die Sensoren (S1, S2, S3, S4) als induktive Verschiebungssensoren ausgeführt sind, durch welche die Abstände (d1, d2, d3, d4) kontaktlos erfasst werden.

5. Verfahren nach einem der vorherigen Ansprüche,
wobei das zweite Paar der diametral gegenüberliegenden Sensoren (S3, S4) um einen Winkel (α) von 60° bis 120° gedreht zum ersten Paar der diametral gegenüberliegenden Sensoren (S1, S2) angeordnet wird.

6. Verfahren nach einem der vorherigen Ansprüche,
wobei der Drehkörper (20) einen zumindest im Wesentlichen kreisförmigen Querschnitt aufweist.

7. Verfahren nach einem der vorherigen Ansprüche,
wobei zumindest ein redundanter Sensor (R1, R2, R3, R4) im Bereich eines der Sensoren (S1, S2, S3, S4) angeordnet wird, wobei ein Abstand (e1, e2, e3, e4) des zumindest einen redundanten Sensors (R1, R2, R3, R4) zum Drehkörper (20) ermittelt wird.

8. Verfahren nach Anspruch 7,
wobei ein defekter Sensor (S1, S2, S3, S4, R1, R2, R3, R4) durch einen Vergleich der ermittelten Abstände (d1, d2, d3, d4, e1, e2, e3, e4) detektiert wird.

9. Steuereinheit (26) mit Mitteln zur Durchführung eines Verfahrens nach einem der Ansprüche 1 bis 8.

10. Computerprogramm zur Durchführung eines Verfahrens nach einem der Ansprüche 1 bis 8 bei Ablauf in einer Steuereinheit (26) nach Anspruch 9.

11. Computerprogrammprodukt mit einem Computerprogramm nach Anspruch 10.

12. Sensorvorrichtung (18) zur Durchführung eines Verfahrens nach einem der Ansprüche 1 bis 8,
welche zumindest vier Sensoren (S1, S2, S3, S4) und eine Steuereinheit (26) nach Anspruch 9 aufweist.

13. Magnetlagervorrichtung (14) mit mindestens einem Magnetlager (16) und mindestens einer Sensorvorrichtung (18) nach Anspruch 12.

14. Elektrische rotierende Maschine (2) mit mindestens einer Magnetlagervorrichtung (14) nach Anspruch 13.

## Claims

1. Method for monitoring a magnetic bearing apparatus (14), having a first pair of at least substantially diametrically opposed sensors (S1, S2) and
a second pair of at least substantially diametrically opposed sensors (S3, S4),
which are arranged such that they are offset in relation to the first pair of sensors (S1, S2) by an angle (α), **characterised in that**
each distance (d1, d2, d3, d4) between a sensor (S1, S2, S3, S4) and a rotating body (20) arranged within the pair of sensors (S1, S2; S3, S4) is ascertained by averaging a plurality of distance measurements over time,
wherein the distances (d1, d2, d3, d4) are compared,
wherein a warning signal is emitted as soon as a difference in the distances (d1, d2, d3, d4) exceeds a threshold value.

2. Method according to claim 1,
wherein, by comparing the distances (d1, d2) of the first pair of sensors (S1, S2) and by comparing the distances (d3, d4) of the second pair of sensors (S3, S4), it is checked whether a regulation has settled.

3. Method according to claim 2,
wherein, when a regulation has settled, a first distance (d1) of the first sensor (S1) and/or a second distance (d2) of the second sensor (S2) are compared with a third distance (d3) of the third sensor (S3) and/or a fourth distance (d4) of the fourth sensor (S4),
wherein a warning signal is emitted as soon as a difference in the distances (d1, d2, d3, d4) exceeds the threshold value.

4. Method according to one of the preceding claims,
wherein the sensors (S1, S2, S3, S4) are designed as inductive displacement sensors, by way of which the distances (d1, d2, d3, d4) are captured in a contactless manner.

5. Method according to one of the preceding claims,
wherein the second pair of the diametrically opposed sensors (S3, S4) is arranged such that it is rotated in relation to the first pair of the diametrically opposed sensors (S1, S2) by an angle (α) of 60° to 120°.

6. Method according to one of the preceding claims,
wherein the rotating body (20) has an at least substantially circular cross-section.

7. Method according to one of the preceding claims,
wherein at least one redundant sensor (R1, R2, R3, R4) is arranged in the region of one of the sensors (S1, S2, S3, S4), wherein a distance (e1, e2, e3, e4) between the at least one redundant sensor (R1, R2, R3, R4) and the rotating body (20) is ascertained.

8. Method according to claim 7,
wherein a defective sensor (S1, S2, S3, S4, R1, R2, R3, R4) is detected by comparing the ascertained distances (d1, d2, d3, d4, e1, e2, e3, e4).

9. Control unit (26) with means for performing a method according to one of claims 1 to 8.

10. Computer program for performing a method according to one of claims 1 to 8 when run in a control unit (26) according to claim 9.

11. Computer program product with a computer program according to claim 10.

12. Sensor apparatus (18) for performing a method according to one of claims 1 to 8,
which has at least four sensors (S1, S2, S3, S4) and a control unit (26) according to claim 9.

13. Magnetic bearing apparatus (14) with at least one magnetic bearing (16) and at least one sensor apparatus (18) according to claim 12.

14. Electric rotating machine (2) with at least one magnetic bearing apparatus (14) according to claim 13.

## Revendications

1. Procédé de contrôle d'un dispositif (14) de palier magnétique,
comportant une première paire de capteurs (S1, S2) opposés au moins sensiblement diamétralement, et
une deuxième paire de capteurs (S3, S4) opposés au moins sensiblement diamétralement,
qui sont décalés d'un angle (α) par rapport à la première paire de capteurs (S1, S2),
**caractérisé en ce que**
l'on détermine, par une moyenne dans le temps d'une pluralité de mesures de distance, respectivement, une distance (d1, d2, d3, d4) d'un capteur (S1, S2, S3, S4) à un corps (20) tournant disposé à l'intérieur des paires (S1, S2, S3, S4) de capteurs,
dans lequel on compare les distances (d1, d2, d3, d4),
dans lequel, dès qu'une différence des distances (d1, d2, d3, d4) dépasse une valeur limite, on émet un signal d'alerte.

2. Procédé suivant la revendication 1,
dans lequel, en comparant les distances (d1, d2) de la première paire de capteurs (S1, S2) et en comparant les distances (d3, d4) de la deuxième paire de capteurs (S3, S4), on contrôle si une régulation est amorcée.

3. Procédé suivant la revendication 2,
dans lequel, lorsqu'une régulation est amorcée, on compare une première distance (d1) du premier capteur (S1) et/ou une deuxième distance (d2) du deuxième capteur (S2) à une troisième distance (d3) du troisième capteur (S3) et/ou à une quatrième distance (d4) du quatrième capteur (S4),
dans lequel, dès que la différence des distances (d1, d2, d3, d4) dépasse la valeur limite, on émet un signal d'alerte.

4. Procédé suivant l'une des revendications précédentes,
dans lequel les capteurs (S1, S2, S3, S4) sont réalisés sous la forme de capteurs inductifs de déplacement, par lesquels on détecte les distances (d1, d2, d3, d4) sans contact.

5. Procédé suivant l'une des revendications précédentes,
dans lequel la deuxième paire de capteurs (S3, S4) opposés diamétralement est tournée d'un angle (α) de 60° à 120° par rapport à la première paire de capteurs (S1, S2) opposés diamétralement.

6. Procédé suivant l'une des revendications précédentes,
dans lequel le corps (20) tournant a une section transversale au moins sensiblement circulaire.

7. Procédé suivant l'une des revendications précédentes,
dans lequel on met au moins un capteur (R1, R2, R3, R4) redondant dans la région de l'un des capteurs (S1, S2, S3, S4), dans lequel on détermine une distance (e1, e2, e3, e4) du au moins un capteur (R1, R2, R3, R4) redondant au corps (20) tournant.

8. Procédé suivant la revendication 7,
dans lequel on détecte un capteur (S1, S2, S3, S4, R1, R2, R3, R4) défectueux en comparant les distances (d1, d2, d3, d4, e1, e2, e3, e4) déterminées.

9. Unité (26) de commande comprenant des moyens pour effectuer un procédé suivant l'une des revendications 1 à 8.

10. Programme d'ordinateur pour effectuer un procédé suivant l'une des revendications 1 à 8, lorsqu'il se déroule dans une unité (26) de commande suivant la revendication 9.

11. Produit de programme d'ordinateur ayant un programme d'ordinateur suivant la revendication 10.

12. Système (18) de capteur pour effectuer un procédé suivant l'une des revendications 1 à 8,
qui a au moins quatre capteurs (S1, S2, S3, S4) et une unité (26) de commande suivant la revendication 9.

13. dispositif (14) de palier magnétique ayant au moins un palier (16) magnétique et au moins un système (18) de capteur suivant la revendication 12.

14. Machine (2) électrique tournante ayant au moins un dispositif (14) de palier magnétique suivant la revendication 13.
